(19) Europäisches Patentamt
European Patent Office
Office européen des brevets

(11) EP 0 907 622 B1

(12) **FASCICULE DE BREVET EUROPEEN**

(45) Date de publication et mention de la délivrance du brevet:
**30.08.2000 Bulletin 2000/35**

(21) Numéro de dépôt: **97927241.6**

(22) Date de dépôt: **05.06.1997**

(51) Int Cl.[7]: **C04B 41/49**, C08J 3/03, C08G 77/14

(86) Numéro de dépôt international:
**PCT/FR97/00996**

(87) Numéro de publication internationale:
**WO 97/47569 (18.12.1997 Gazette 1997/54)**

# (54) EMULSION AQUEUSE DE RESINE SILICONE POUR L'HYDROFUGATION DE MATERIAUX DE CONSTRUCTION

WÄSSRIGE SILOXONEMULSION ZUR WASSERABWEISENDEN BEHANDLUNG VON BAUMATERIALIEN

AQUEOUS SILICON RESIN EMULSION FOR WATERPROOFING BUILDING MATERIALS

(84) Etats contractants désignés:
**AT BE CH DE DK ES FI FR GB GR IE IT LI NL PT SE**

(30) Priorité: **10.06.1996 FR 9607390**

(43) Date de publication de la demande:
**14.04.1999 Bulletin 1999/15**

(73) Titulaire: **RHODIA CHIMIE**
**92408 Courbevoie Cédex (FR)**

(72) Inventeurs:
- **BAKER, Gary**
  **Manchester (GB)**
- **GARCIN, Eric**
  **F-92200 Neuilly (FR)**
- **GOUBET, Sandrine**
  **F-69008 Lyon (FR)**
- **PRINCE, John**
  **Rochdale, Lancashire (GB)**

(74) Mandataire: **Fabre, Madeleine-France et al**
**RHODIA SERVICES,**
**Direction de la Propriété Industrielle**
**25, quai Paul Doumer**
**92408 Courbevoie Cédex (FR)**

(56) Documents cités:
**EP-A- 0 157 323**
**WO-A-92/19671**
**WO-A-95/16752**
**WO-A-95/22580**
**US-A- 2 982 674**
**US-A- 4 713 410**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 907 622 B1**

Printed by Jouve, 75001 PARIS (FR)

## Description

La présente invention est relative à des émulsions hydrofuges, en particulier pour l'hydrofugation des constructions et matériaux de construction du type pierre, béton, mortier, briques, tuiles, bois, etc., ainsi qu'à une méthode pour leur préparation et un procédé d'hydrofugation.

L'humidité est la source de nombreux dégâts dans les constructions : éclats dus au gel, apparition de mousses et lichens, perte d'isolation thermique, etc.

C'est pourquoi ont été développées des compositions destinées à hydrofuger des matériaux de construction.

Les plus efficaces des hydrofugeants développés et utilisés habituellement sont des compositions en phase solvant.

Certains de ces produits se révèlent particulièrement efficaces, mais présentent l'inconvénient de devoir être dilués et appliqués en phase solvant. Il en va ainsi de certains hydrofugeants à base de résine silicone en phase solvant qui sont actuellement commercialisés. Toutefois, les solvants sont rejetés dans l'atmosphère, contribuent au rejet de COV et posent des problèmes de sécurité pour leur manipulation.

Les hydrofugeants en phase aqueuse sont plus difficiles à réaliser. Les difficultés sont notamment de leur conférer une efficacité proche de ceux en phase solvant et aussi un stabilité suffisante dans le temps.

Le brevet US-A-5 409 527 a proposé, pour l'hydrofugation de matériaux aussi divers que le bois, les matériaux cellulosés, les textiles, la maçonnerie et le béton, ou encore les poudres, par exemple le carbonate de calcium, les encres d'imprimerie, les adhésifs, le cuir et les revêtements de surface aqueux, une composition hydrofuge comprenant le produit de réaction de (i) un ou plusieurs acides carboxyliques ou anhydrides carboxyliques contenant de 3 à 22 atomes de carbone, (ii) une ou plusieurs amines aromatiques ou aliphatiques polyfonctionnelles ou amines substituées, contenant de 2 à 25 atomes de carbone, et (iii) un agent de réticulation qui est un complexe de métal hydrosoluble, contenant un ou plusieurs métaux choisis parmi le groupe zinc, aluminium, titane, cuivre, chrome, fer, zirconium et plomb. Il s'agit d'une composition aqueuse qui peut en outre comporter une graisse hydrocarbonée saturée et/ou une résine alkyde.

La présente invention a pour objectif de fournir de nouvelles compositions à base de résine silicone en phase aqueuse ayant un pouvoir hydrofuge au moins équivalent à celui des compositions de même nature en phase solvant, voire même ayant un pouvoir hydrofuge supérieur à ces dernières.

Un autre objectif de l'invention est de proposer des compositions efficaces et respectueuses de l'environnement.

Un autre objectif encore de l'invention est de fournir de telles compositions qui soient stables, notamment sur une durée de un an ou plus.

La demanderesse a trouvé que ces objectifs pouvaient être atteints en combinant, sous la forme d'une émulsion, une résine silicone alkoxylée ou hydroxylée particulière, avec un tensio-actif à base d'amines, de préférence d'alcoolamine, d'acide carboxylique et d'un sel métallique, du type décrit dans US-A-5 409 527.

L'objet de l'invention est donc une émulsion aqueuse comprenant :

**1**. au moins une résine

$$M_{\alpha}D_{\beta}T_{\gamma}\,Q_{\delta}(OR)_{\varepsilon} \qquad (I)$$

où :

- $M = R^1R^2R^3SiO1/2$
  $D = R^4R^5SiO2/2$
  $T = R^6SiO3/2$
  $Q = SiO4/2$
- $R^1$, $R^2$, $R^3$, $R^4$, $R^5$ et $R^6$, identiques ou différents entre eux, représentent chacun un reste hydrocarboné en $C_1$-$C_{12}$ et plus particulièrement en $C_1$-$C_8$;
- R : atome d'hydrogène ou radical alkyle linéaire ou ramifié, en $C_1$-$C_4$.
- le copolymère présente dans sa structure au moins un motif T ou Q ;
- les symboles $\alpha$, $\beta$, $\gamma$, $\delta$ représentent les fractions molaires (ou la proportion en nombre) des atomes de silicium respectivement de types M, D, T et Q relativement à un atome de silicium de la résine de formule (I) ; le symbole $\varepsilon$ représente la fraction molaire (ou la proportion en nombre) des extrémités $\equiv$SiOR relativement à un atome de silicium de la résine de formule (I) ; ces symboles variant dans les intervalles suivants :

α : 0 - 0,5
β : 0 - 0,95
γ : 0 - 0,9
δ : 0 - 0,8
ε : 0,05 - 2

avec $\alpha + \beta + \gamma + \delta = 1$

**2**. le produit de réaction entre :

**2a.** une ou plusieurs amines aromatiques ou aliphatiques polyfonctionnelles contenant de 2 à 25 atomes de carbone ;
**2b.** un ou plusieurs acides ou anhydrides carboxyliques contenant de 3 à 22 atomes de carbone ;
**2c.** au moins un agent de réticulation qui est un complexe de métal hydrosoluble.

Les motifs M, quand il y en a plusieurs, peuvent être identiques ou différents entre eux ; la même remarque s'applique également aux motifs D et T. De même les motifs OR peuvent être identiques ou différents entre eux.
Selon un mode de réalisation préféré de l'invention, la résine est un copolymère de formule (I) où :

. $R^1$ à $R^6$ :
identiques ou différents entre eux, représentent chacun un radical alkyle, linéaire ou ramifié, en $C_1$-$C_8$ ;
. R : atome d'hydrogène ou radical alkyle linéaire ou ramifié, en $C_1$-$C_4$ ;
. le copolymère présente dans sa structure au moins un motif T (le symbole y étant alors un nombre different de zéro), associé à l'un au moins des motifs choisis parmi M et D.

Comme résines qui conviennent bien, correspondant au mode de réalisation préféré, on citera en particulier les espèces **A** et **B** suivantes :

**A** : les copolymères $\mathbf{M_\alpha D_\beta T_\gamma (OR)_\varepsilon}$ (II) où :

**A1** : selon une première définition :

. $R^1$ à $R^6$ : radicaux alkyles identiques ou différents en $C_1$-$C_8$;
. R : atome d'hydrogène ou radical alkyle en $C_1$-$C_4$;
. α : 0,1 - 0,3
. β : 0,1 - 0,5
. γ : 0,4 - 0,8
. ε : 0,08 - 1,5

avec $\alpha + \beta + \gamma = 1$.
**A2** : selon une deuxième définition plus préférée :

. $R^1$ à $R^6$ : radicaux alkyles identiques en $C_1$-$C_3$;
. R : atome d'hydrogène ou radical alkyle en $C_1$-$C_4$;
. α : 0,1 - 0,3
. β : 0,1 - 0,5
. γ : 0,4 - 0,8
. ε : 0,08 - 1,5

avec $\alpha + \beta + \gamma = 1$.

**B** : les copolymères $\mathbf{D_\beta T_\gamma (OR)_\varepsilon}$ (III) où :

**B1** : selon une première définition :

. $R^4$ à $R^6$ :
identiques ou différents entre eux, représentent chacun un radical alkyle, linéaire ou ramifié, en $C_1$-$C_8$;
R : atome d'hydrogène ou radical alkyle linéaire ou ramifié, en $C_1$-$C_4$ ;

- au moins 25 % en nombre de l'un ou plusieurs des substituants $R^4$ à $R^6$ représentent un radical alkyle, linéaire ou ramifié, en $C_3$-$C_8$ ;
- β : 0,2 - 0,9
  γ : 0,1 - 0,8
  ε : 0,2 - 1,5 .

**B2** : selon une deuxième définition plus préférée:

- $R^4$ et $R^5$ :
  identiques entre eux, représentent chacun un radical alkyle en $C_1$-$C_2$ ;
  $R^6$ :
  identiques représentent chacun un radical alkyle, linéaire ou ramifié, en $C_3$-$C_8$;
  R : atome d'hydrogène ou alkyle linéaire en $C_1$-$C_3$ ;
- β : 0,2 - 0,6
  γ : 0,4 - 0,8
  ε : 0,3 - 1,0.

Quand le substrat est neutre (du point de vue du pH généré en présence d'eau), par exemple pierres, briques, tuiles, bois, on peut utiliser indifféremment une espèce A ou B. Par ailleurs, les performances d'hydrofugation peuvent être augmentées au besoin, par ajout dans l'émulsion d'un composé métallique de durcissement. Ces composés sont essentiellement les sels d'acides carboxyliques, les halogénures de métaux choisis parmi le plomb, le zinc, le zirconium, le titane, le fer, l'étain, le calcium et le manganèse. Conviennent bien à cet égard, les composés catalytiques à base d'étain, généralement un sel d'organoétain (par exemple les bischélates d'étain, les dicarboxylates de diorganoétain).

Quand le matériau de construction est un substrat alcalin (du point de vue du pH généré en présence d'eau), c'est-à-dire un matériau de construction (par exemple mortiers, bétons) obtenu par le mélange de liant hydraulique, tel que du ciment, de matériau inerte, d'eau et éventuellement d'adjuvant, on utilise avantageusement une espèce B.

De manière générale, chacun des radicaux $R^1$ à $R^6$ peut être un radical alkyle linéaire ou ramifié, par exemple méthyle, éthyle, propyle, butyle, isobutyle ; un radical alcényle comme par exemple vinyle ; un radical aryle, par exemple phényle ou naphtyle ; un radical arylalkyle comme par exemple benzyle ou phényléthyle, alkylaryle comme par exemple tolyle, xylyle ; ou un radical araryle comme le biphénylyle.

Les amines 2a sont des amines primaires, secondaires ou tertiaires, éventuellement substituées, par exemple par un ou plusieurs groupes OH, ou des amines sous forme d'amides ou d'acides aminés.

De manière particulièrement préférée, il s'agit d'alcoolamine et notamment d'amines à groupement(s) alkyle (s) ayant de 1 à 5 atomes de carbone et substitués par au moins un OH, de préférence de 1 à 3. On peut citer notamment :

- amino méthylpropanol, par exemple : 2-amino-2-méthylpropane-1-ol ;
- amino éthyl propane diol, par exemple : 2-amino-2- éthylpropane-1,3-diol, le préféré;
- triéthanolamine.

Il peut aussi s'agir de diamines, telles que hydrazine et hexaméthylènediamine, d'amines cycliques telles que la morpholine et la pyridine, d'acides aminés aromatiques et aliphatiques tels que l'acide 3-méthyl-4-aminobenzoïque, ou encore d'amides de formule (IV)

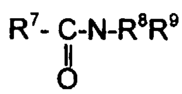

(IV)

dans laquelle $R^7$, $R^8$ et $R^9$ peuvent représenter l'hydrogène ou des groupes alkyle ayant de 1 à 5 atomes de carbone, tels que le formamide, l'acétamide, le N-éthylacétamide et le N,N-diméthylbutyramide.

L'acide carboxylique 2b est préférentiellement un acide gras saturé ou insaturé, linéaire ou ramifié, en $C_3$-$C_{22}$, préférentiellement $C_{10}$-$C_{18}$, éventuellement substitué, par exemple par un groupe OH, comme notamment :

- acide oléique
- acide isostéarique
- acide stéarique, le préféré
- acide ricinoléique

- acide gras du tallöl.

Les agents de réticulation préférés contiennent du zinc, de l'aluminium, du titane, du cuivre, du chrome, du fer, du zirconium et/ou du plomb.

Les agents de réticulation peuvent être un sel ou un complexe d'un tel métal ou de tels métaux. Les sels peuvent être acides, basiques ou neutres. Les sels appropriés incluent les halides, les hydroxydes, les carbonates, les nitrates, les nitrites, les sulfates, les phosphates, etc.

Les agents de réticulation particulièrement préférés dans le cadre de la présente invention sont les complexes du zirconium, par exemple ceux décrits dans la demande de brevet GB-A-1 002 103, qui sont des sels du radical zirconyl avec au moins deux acides monocarboxyliques, un groupe acide ayant de 1 à 4 atomes de carbone, l'autre ayant plus de 4 atomes de carbone, et pouvant être réalisé par un traitement à reflux de l'acide carboxylique de 1 à 4 atomes de carbone avec une pâte de carbonate de zirconyl, puis ajout de l'acide carboxylique ayant plus de 4 atomes de carbone. Des composés métalliques inorganiques hydrosolubles peuvent également être utilisés. Le carbonate de zirconium et d'ammonium est particulièrement préféré.

De préférence, l'émulsion comprend de 10 à 30% en poids de résine 1, le restant étant en général le produit de réaction 2.

Le produit de réaction 2 est préparé de préférence par dissolution de l'acide carboxylique 2a et de l'amine 2b dans l'eau, les composés 2a et 2b étant avantageusement en quantités équimolaires ou proches de l'équimolarité, par exemple pouvant aller au moins jusqu'à 1,2 mole d'acide carboxylique, notamment stéarique, pour 1 mole d'amine, notamment 2-amino-2-éthylpropane-1,3-diol. De préférence, le métal, notamment le zirconium, de l'agent de réticulation est aussi en quantité équimolaire ou en quantité proche de l'équimolarité.

Il est préférable d'ajouter l'eau au mélange des composés 2a et 2b.

De préférence, l'eau et les composés 2a et 2b sont chauffés à une température de 70 à 75° C, sous agitation douce. La température est maintenue notamment pendant 5 min environ.

Le composé 2c est ajouté ensuite, de préférence après refroidissement entre 30 et 35° C. L'ensemble est agité, de préférence de manière douce pendant 1 min environ.

Pour la formation de l'émulsion 1 + 2, on ajoute la résine dans 2 tout en agitant fortement pendant une durée allant de 3 à 15 min, de préférence allant de 3 à 7 min. En même temps, on maintien avantageusement la masse réactionnelle à une température comprise entre 30 et 80°C, avec la condition selon laquelle, dans le cas de la mise en oeuvre d'une résine DT(OR) d'espèce B, cette température est au plus égale à 40°C.

L'invention a encore pour objet le procédé de préparation d'une émulsion dans les conditions décrites.

L'invention va être maintenant décrite plus en détail à l'aide d'exemples de réalisation pris à titre non limitatif et se référant au dessin annexé dans lequel :

- la figure 1 est un graphe présentant les résultats d'hydrofugation du mortier avec le temps (j = jours) en abcisse et l'absorption d'eau ($g/cm^2$) en ordonnée ; avec :

  1- témoin
  2- résine DTOR en phase solvant (6,6 %)
  3- émulsion I (6,6 %)
  4- émulsion II (6,6 %)

- la figure 2 est un graphe présentant les résultats d'hydrofugation de pierre de Massengis, avec le temps (h = heure) en abcisse et l'eau absorbée ($g/cm^2$) en ordonnée ; avec:

  1- témoin
  2- émulsion I
  3- émulsion II
  4- résines DTOR et MDTOH en phase solvant

- la figure 3 est un graphe équivalent à celui de la figure 2 mais relatif à l'hydrofugation de pierre de Saint Vaast ; avec :

  1- témoin
  2- émulsion I
  3- émulsion II
  4- résine DTOR en phase solvant
  5- résine MDTOH en phase solvant.

**Exemple 1 : Mode de préparation d'une résine DT(OR) avec R = C2H5 :**

Mode réactionnel : cohydrométhanolyse de chlorosilanes.

Dans un réacteur de 2 litres, on charge 3,5 moles de diméthyldichlorosilane et 3,5 moles de propyltrichlorosilane. On amène la température à 60 °C, puis on coule un mélange éthanol/eau (6,12 moles d'éthanol - 6,6 moles d'eau) en 2 heures, sous agitation et chauffage à 80°C. On élimine ensuite l'éthanol acide par distillation 1 h 50 min à 120°C.

Ensuite, on élimine les chlores résiduels par lavage avec 166 g d'éthanol et 5,7 g d'eau (pour ajuster à la viscosité voulue), puis on distille 1 h 05 min à 120°C. On refroidit à 100°C et on neutralise au bicarbonate de sodium (11,1 g) à 100°C pendant 1h. On obtient 515 g de résine après refroidissement à 50°C et filtration.

L'analyse RMN$^{29}$Si révèle la distribution donnée ci-après des différents motifs :

| Motifs | % molaire relativement au Si |
|---|---|
| D(OR) | 2,6 |
| D | 37,1 |
| $T(OR)_2$ | 5,8 |
| T(OR) | 23,9 |
| T | 30,6 |

Nombre de motifs Si(OR) par atome de Si = 0,381

Formule de la résine DT(OR) :

$$D_{0,397}T_{0,603}(OR)_{0,381}$$

avec D = $(CH_3)_2SiO_{2/2}$ et T = $C_3H_7SiO_{3/2}$

Cette résine sera dénommée résine A dans la suite de la description.

**Exemple 2 : Préparation de la résine MDT(OH) par un procédé discontinu :**

Dans un réacteur on charge :

67% en poids de méthyltrichlorosilane
23% en poids de diméthyldichlorosilane
10% en poids de triméthylchlorosilane

et de l'éther isopropylique : ratio en poids éther isopropylique sur chlorosilane : 1,15 à 1,2.

Une cohydrolyse est réalisée par coulée lente d'eau (1h 30 min) en maintenant la températeure du milieu réactionnel à 26.30°C. La quantité d'eau ajoutée est telle que la phase aqueuse acide recueillie après décantation est de 18 à 20% du poids de la masse réactionnelle. On lave la phase organique à l'eau, pour éliminer l'acidité restante. On réalise une décantation et on élimine l'eau de lavage.

On élimine par distillation l'éther isopropylique de la phase organique résiduelle, et on isole la résine souhaitée. L'analyse RMN$^{29}$Si révèle la distribution suivante :

| MOTIFS | % molaire relativement au Si |
|---|---|
| M | 13,09 |
| D(OH) | 0,58 |
| D | 23,14 |
| T(OH) | 9,73 |
| T | 53,46 |

Formule de la résine MDT(OH) :

$$M_{0,13}D_{0,24}T_{0,63}(OH)_{0,103}$$

avec M = $(CH_3)_3SiO1/2$
D = $(CH_3)_2SiO2/2$
T = $CH_3SiO3/2$

**Exemple 3 : Méthode de préparation de l'émulsion de résine**

Un acide carboxylique (5,6 g) et une alkanolamine (2,4 g) sont chargés à un ratio équimolaire dans un réacteur approprié.

On ajoute alors de l'eau (728,8 g) dans le réacteur et le mélange est ensuite porté à 70-75°C sous agitation douce avec le "SILVERSON L4R bench top homogeniser".

A 70-75°C, le contenu du réacteur est mélangé pendant 5 minutes avant d'être refroidi à 30-35°C, toujours sous agitation.

La résine silicone peut alors être chargée.

A 30-35°C le complexe réticulant métallique (carbonate d'ammonium et de zirconium, contenant 1 mole de zirconium) est ajouté (24,4 g), ce qui est suivi d'une agitation de 1 minute à vitesse minimum. Ensuite, on ajoute la résine silicone (238,8 g) sur une période de 5 minutes en agitant à la vitesse maximum du mélangeur (6000tr/min). La température à l'intérieur du réacteur est maintenue inférieure à 40°C.

Une fois le mélange terminé, l'émulsion est récupérée et stockée.

La température peut varier de 35 à 75°C selon la résine.

**Exemple 4 : Emulsions préparées :**

Les émulsions sont préparées selon le mode opératoire de l'exemple 1. L'acool aminé est le 2-amino-2-éthyl-propane-1,3-diol. L'acide est l'acide stéarique. Le réticulant métallique est une solution d'ammonium zirconium carbonate.

Les résines utilisées sont :

- la résine DTOR de l'exemple 1. Donne l'émulsion I.
- la résine MDTOH de l'exemple 2. Donne l'émulsion II.

A titre de comparaison, on utilise aussi les résines respectives en phase solvant ; il s'agit de préparations dans du white spirit avec catalyseur et 6,6 % de résine.

**Exemple 5 : Procédure d'évaluation des produits :**

1. Sur pierre

Deux types de pierres de porosités différentes sont utilisés comme support :

- Massangis (porosité volumique : 13 %)
- Saint Vaast (pv : 42 %)

Chacun des hydrofugeants est testé sur deux pierres de même type mais de surface différente : 200 $cm^2$ et 145 $cm^2$.

Les pierres sont tout d'abord condionnées 24 heures à 25°C et 50 % d'humidité.

Ensuite, elles sont hydrofugées par capillarité, c'est-à-dire qu'elles sont mises au contact de quelques millimètres de solution hydrofugeante :

- 2 fois 10 secondes à 20 secondes d'intervalle pour les pierres peu poreuses (Massangis)
- 3 fois 10 secondes à 20 secondes d'intervalle pour les pierres plus poreuses (Saint Vaast).

La quantité d'hydrofugeant absorbée varie selon la nature de l'hydrofugeant et celle de la pierre :

| | Quantité moyenne d'hydrofugeant absorbée ($g/m^2$) | |
|---|---|---|
| | St Vaast | Massangis |
| Emulsion I | 1190 | 167 |

(suite)

| | Quantité moyenne d'hydrofugeant absorbée ($g/m^2$) | |
|---|---|---|
| | St Vaast | Massangis |
| Emulsion II | 1470 | 214 |
| DTOR 6,6 % | 2490 | 180 |
| DTOH 6,6 % | 2950 | 175 |

Après 24 heures de séchage à température ambiante, on détermine l'effet perlant que l'hydrofugation a conféré à chaque pierre.

Les pierres sont ensuite placées dans une enceinte à 75 % d'humidité et 25°C pendant 6 jours, puis par capillarité, pendant sept jours, on détermine le pouvoir hydrofuge conféré à chaque pierre par chaque produit, c'est-à-dire la quantité d'eau absorbée par chacune des pierres.

2. Sur mortier

On utilise des éprouvettes de 175 $cm^2$ de surface. Le traitement est réalisé par immersion des éprouvettes 2 x 2 minutes dans la solution hydrofugeante.

| | Quantité déposée ($g/m^2$) | Quantité ($l/m^2$) |
|---|---|---|
| Emulsion I | 210 | 0,210 |
| Emulsion II | 213 | 0,213 |
| DTOR 6,6 % | 116 | 0,145 |

Elles sont ensuite séchées 24 heures à température ambiante, puis l'effet perlant est déterminé. Le séchage est poursuivi sept jours à 75 % d'humidité et 25°C.

La reprise d'eau est déterminée par immersion dans l'eau pendant 28 jours.

3. Stabilité.

On estime de façon visuelle la stabilité des émulsions hydrofugeantes.

**Exemple 6 : résultats.**

1. Pierres

Effet perlant

Après 24 heures de séchage à température ambiante, l'effet perlant conféré aux pierres par les deux émulsions est très marqué mais ne peut être différencié.

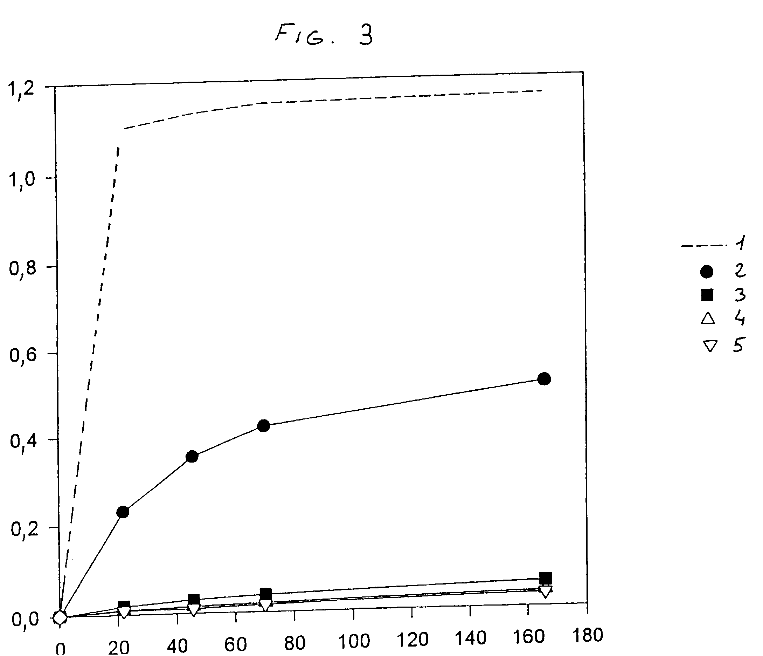

Hydrofugation (figures 2, 3)

Pour chaque type de pierre, on détermine l'effet hydrofuge apporté par les deux hydrofugeants, c'est-à-dire l'on compare la quantité d'eau absorbée par une pierre non traitée à celle absorbée par les pierres traitées. Une comparaison est également faite avec les résines en phase solvant.

Les deux émulsions ont un pouvoir hydrofugeant marqué qui se révèle équivalent au pouvoir hydrofugeant reconnu élevé des résines en phase solvant.

2. Sur mortier

Effet perlant

L'effet perlant est déterminé après 24 heures de séchage à température ambiante. On n'observe pas de différence significative entre les deux émulsions ; l'effet perlant est bon.

Hydrofugation (voir figure 1)

Les deux émulsions montrent un pouvoir d'hydrofugation. Celui de l'émulsion I est plus marqué et se rapproche de son équivalent en phase solvant.

3. Stabilité

La stabilité des émulsions est résumée dans le tableau ci-dessous :

| Stabilité | |
|---|---|
| Emulsion I | 1 an |
| Emulsion II | 1 an |

## Revendications

**1.** Emulsion aqueuse comprenant :

1. au moins une résine

$$M_{\alpha}D_{\beta}T_{\gamma}Q_{\delta}(OR)_{\varepsilon} \quad (I)$$

où :

- M = $R^1R^2R^3SiO1/2$
  D = $R^4R^5SiO2/2$
  T = $R^6SiO3/2$
  Q = $SiO4/2$
- $R^1$, $R^2$, $R^3$, $R^4$, $R^5$ et $R^6$, identiques ou différents entre eux, représentent chacun un reste hydrocarboné en $C_1$-$C_{12}$ et plus particulièrement en $C_1$-$C_8$ ;
- R : atome d'hydrogène ou radical alkyle linéaire ou ramifié, en $C_1$-$C_4$ ;
- le copolymère présente dans sa structure au moins un motif T ou Q ;
- les symboles $\alpha$, $\beta$,$\gamma$,$\delta$ représentent les fractions molaires des atomes de silicium respectivement de types M, D, T et Q relativement à un atome de silicium de la résine de formule (I); le symbole $\varepsilon$ représente la fraction molaire des extrémités $\equiv$SiOR relativement à un atome de silicium de la résine de formule (I) ; ces symboles variant dans les intervalles suivants :

  $\alpha$ : 0-0,5
  $\beta$ : 0 - 0,95
  $\gamma$ : 0-0,9
  $\delta$ : 0 - 0,8
  $\varepsilon$ : 0,05 - 2

avec $\alpha + \beta + \gamma + \delta = 1$ ;
2. le produit de réaction entre :

2a. une ou plusieurs amines aromatiques ou aliphatiques polyfonctionnelles contenant de 2 à 25 atomes de carbone ;
2b. un ou plusieurs acides ou anhydrides carboxyliques contenant de 3 à 22 atomes de carbone ;
2c. au moins un agent de réticulation qui est un complexe de métal hydrosoluble.

**2.** Emulsion selon la revendication 1, caractérisée en ce que la résine est un copolymère de formule (I) où :

- $R^1$ à $R^6$ : identiques ou différents entre eux, représentent chacun un radical alkyle, linéaire ou ramifié, en $C_1$-$C_8$ ;
- R : atome d'hydrogène ou radical alkyle linéaire ou ramifié, en $C_1$-$C_4$ ;

- le copolymère présente dans sa structure au moins un motif T (le symbole $\gamma$ étant alors un nombre différent de zéro), associé à l'un au moins des motifs choisis parmi M et D.

3. Emulsion selon la revendication 1, caractérisée en ce que la résine est de type :

$$M_{\alpha}D_{\beta}T_{\gamma}(OR)_{\varepsilon} \qquad (II)$$

où :

- $R^1$ à $R^6$ : radicaux alkyles identiques ou différents en $C_1$-$C_8$ ;
- R : atome d'hydrogène ou radical alkyle en $C_1$-$C_4$;
- $\alpha$ : 0,1 - 0,3
- $\beta$ : 0,1 - 0,5
- $\gamma$ : 0,4 - 0,8
- $\varepsilon$ : 0,08 - 1,5

avec $\alpha + \beta + \gamma = 1$

4. Emulsion selon la revendication 3, caractérisée en ce que les radicaux $R^1$ à $R^6$ sont des radicaux alkyles identiques en $C_1$ à $C_3$.

5. Emulsion selon la revendication 1, caractérisée en ce que la résine est de type :

$$D_{\beta}T_{\gamma}(OR)_{\varepsilon} \qquad (III)$$

où:

- $R^4$ à $R^6$ :
  identiques ou différents entre eux, représentent chacun un radical alkyle, linéaire ou ramifié, en $C_1$-$C_8$ ;
- R : atome d'hydrogène ou radical alkyle linéaire ou ramifié, en $C_1$-$C_4$ ;
- au moins 25 % en nombre de l'un ou plusieurs des substituants $R^4$ à $R^6$ représentent un radical alkyle, linéaire ou ramifié, en $C_3$-$C_8$;
- $\beta$ : 0,2 - 0,9
  $\gamma$ : 0,1 - 0,8
  $\varepsilon$ : 0,2 - 1,5 .

6. Emulsion selon la revendication 1, caractérisée en ce que la résine est de type :

$$D_{\beta}T_{\gamma}(OR)_{\varepsilon} \qquad (III)$$

où

- $R^4$ et $R^5$ :
  identiques entre eux, représentent chacun un radical alkyle en $C_1$-$C_2$;
  $R^6$ : identiques entre eux, représentent chacun un radical alkyle, linéaire ou ramifié, en $C_3$-$C_8$;
  R = atome d'hydrogène ou alkyle linéaire en $C_1$-$C_3$ ;
- $\beta$ : 0,2 - 0,6
  $\gamma$ : 0,4 - 0,8
  $\varepsilon$ : 0,3 - 1,0.

7. Emulsion selon la revendication 1, caractérisée en ce que les radicaux $R^1$ à $R^6$ sont choisis parmi le groupe consistant en:
   radical alkyle linéaire ou ramifié, par exemple méthyle, éthyle, propyle, butyle, isobutyle ; un radical alcényle comme par exemple vinyle ; un radical aryle, par exemple phényle ou naphtyle ; un radical arylalkyle comme par

exemple benzyle ou phényléthyle, alkylaryle comme par exemple tolyle, xylyle ; ou radical araryle comme le biphénylyle.

8. Emulsion selon l'une quelconque des revendications 1 à 7, caractérisée en ce que les amines 2a sont des amines primaires, secondaires ou tertiaires, éventuellement substituées, par exemple par un ou plusieurs groupements OH, ou des amines sous forme d'amides ou d'acides aminés.

9. Emulsion selon la revendication 8, caractérisée en ce que l'amine 2a est une alcoolamine.

10. Emulsion selon la revendication 9, caractérisée en ce qu'il s'agit d'amine à groupement(s) alkyle(s) ayant de 1 à 5 atomes de carbone et substitués par au moins un OH, de préférence de 1 à 3.

11. Emulsion selon la revendication 10, caractérisée en ce que l'amine est choisie parmi le groupe consistant en 2-amino-2- méthylpropane-1-ol et 2-amino-2-éthylpropane-1,3-diol.

12. Emulsion selon la revendication 8, caractérisée en ce que l'amine 2a est choisie parmi le groupe consistant en diamines, telles que hydrazine et hexaméthylènediamine, d'amines cycliques telles que la morpholine et la pyridine, d'acides aminés aromatiques et aliphatiques tels que l'acide 3-méthyl-4-aminobenzoïque, ou encore d'amides de formule (IV)

$$R^7\text{-}\underset{\substack{\| \\ O}}{C}\text{-}N\text{-}R^8R^9 \qquad (IV)$$

dans laquelle $R^7$, $R^8$ et $R^9$ peuvent représenter l'hydrogène ou des groupes alkyle ayant de 1 à 5 atomes de carbone, tels que le formamide, l'acétamide, le N-éthylacétamide et le N,N-diméthylbutyramide.

13. Emulsion selon l'une quelconque des revendications 1 à 12, caractérisée en ce que l'acide carboxylique 2b est un acide gras saturé ou insaturé, linéaire ou ramifié, en $C_3$-$C_{22}$, préférentiellement $C_{10}$-$C_{18}$.

14. Emulsion selon la revendication 13, caractérisée en ce que l'acide carboxylique 2b est substitué, par exemple par un groupement OH.

15. Emulsion selon la revendication 13, caractérisée en ce que l'acide carboxylique 2b est choisi parmi le groupe consistant en acide oléique, acide isostéarique, acide stéarique, acide ricinoléique et acides gras du tallöl.

16. Emulsion selon l'une quelconque des revendications 1 à 15, caractérisée en ce que l'amine 2a est la 2-amino-2-éthylpropane-1,3-diol et l'acide carboxylique 2b est l'acide stéarique.

17. Emulsion selon l'une quelconque des revendications 1 à 16, caractérisée en ce que l'agent de réticulation 2c est un complexe de zirconium, de préférence un carbonate d'ammonium et de zirconium.

18. Emulsion selon l'une quelconque des revendications 1 à 17, caractérisée en ce qu'elle comprend en sus un composé métallique de durcissement.

19. Procédé d'hydrofugation de matériaux de construction dans lequel on applique sur le matériau en question une émulsion selon l'une quelconque des revendications précédentes.

20. Procédé d'hydrofugation selon la revendication 19, dans lequel l'on applique l'émulsion sur un matériau qui est un substrat neutre, tel que pierre, brique, tuile, bois.

21. Procédé d'hydrofugation de matériaux de construction fait d'un substrat alcalin obtenu à partir du mélange de liant hydraulique, de matière inerte, d'eau et éventuellement d'adjuvant, tel que mortier ou béton, dans lequel on applique sur le matériau en question une émulsion selon l'une quelconque des revendications 7 à 18 ensemble la revendication 5 ou 6.

## Claims

**1.** Aqueous emulsion comprising:

1. at least one resin

$$M_\alpha D_\beta T_\gamma Q_\delta (OR)_\varepsilon \quad (I)$$

in which:

- M = $R^1R^2R^3SiO1/2$
  D = $R^4R^5SiO2/2$
  T = $R^6SiO3/2$
  Q =SiO4/2
- $R^1$, $R^2$, $R^3$, $R^4$, $R^5$ and $R^6$, which may be identical to or different from each other, each represent a $C_1$-$C_{12}$ and more particularly $C_1$-$C_8$ hydrocarbon-based residue;
- R: hydrogen atom or linear or branched $C_1$-$C_4$ alkyl radical;
- the copolymer has in its structure at least one unit T or Q;
- the symbols $\alpha$, $\beta$, $\gamma$ and $\delta$ represent the mole fractions of the silicon atoms of types M, D, T and Q respectively, relative to a silicon atom of the resin of formula (I); the symbol $\varepsilon$ represents the mole fraction of the extremities $\equiv$SiOR relative to a silicon atom of the resin of formula (I); these symbols varying within the following ranges:

  $\alpha$: 0-0.5
  $\beta$: 0-0.95
  $\gamma$: 0-0.9
  $\delta$ : 0-0.8
  $\varepsilon$: 0.05-2

  with $\alpha + \beta + \gamma + \delta = 1$;

2. the product of reaction between:

   2a. one or more polyfunctional aromatic or aliphatic amines containing from 2 to 25 carbon atoms;
   2b. one or more carboxylic acids or anhydrides containing from 3 to 22 carbon atoms;
   2c. at least one crosslinking agent which is a water-soluble metal complex.

**2.** Emulsion according to claim 1, characterized in that the resin is a copolymer of formula (I) in which:

- $R^1$ to $R^6$: which may be identical to or different from each other, each represent a linear or branched $C_1$-$C_8$ alkyl radical;
- R: hydrogen atom or linear or branched $C_1$-$C_4$ alkyl radical;
- the copolymer has in its structure at least one unit T (the symbol y then being a number other than zero) combined with at least one of the units chosen from M and D.

**3.** Emulsion according to claim 1, characterized in that the resin is of the type:

$$M_\alpha D_\beta T_\gamma (OR)_\varepsilon \quad (II)$$

in which:

- $R^1$ to $R^6$: identical or different $C_1$-$C_8$ alkyl radicals;
- R: hydrogen atom or $C_1$-$C_4$ alkyl radical;
- $\alpha$: 0.1-0.3
- $\beta$: 0.1-0.5

- $\gamma$: 0.4-0.8
- $\varepsilon$: 0.08-1.5

with $\alpha + \beta + \gamma = 1$.

**4.** Emulsion according to claim 3, characterized in that the radicals $R^1$ to $R^6$ are identical $C_1$ to $C_3$ alkyl radicals.

**5.** Emulsion according to claim 1, characterized in that the resin is of the type:

$$D_\beta T_\gamma (OR)_\varepsilon \qquad \text{(III)}$$

in which:

- $R^4$ to $R^6$:
  which may be identical to or different from each other, each represent a linear or branched $C_1$-$C_8$ alkyl radical;
- R: hydrogen atom or linear or branched $C_1$-$C_4$ alkyl radical;
- at least 25% by number of one or more of the substituents $R^4$ to $R^6$ represent a linear or branched $C_3$-$C_8$ alkyl radical;
- $\beta$: 0.2-0.9
- $\gamma$: 0.1-0.8
- $\varepsilon$: 0.2-1.5.

**6.** Emulsion according to claim 1, characterized in that the resin is of the type:

$$D_\beta T_\gamma (OR)_\varepsilon \qquad \text{(III)}$$

in which:

- $R^4$ and $R^5$:
  which are identical to each other, each represent a $C_1$-$C_2$ alkyl radical;
  $R^6$: which are identical to each other, each represent a linear or branched $C_3$-$C_8$ alkyl radical;
- R = hydrogen atom or linear $C_1$-$C_3$ alkyl;
- $\beta$: 0.2-0.6
- $\gamma$: 0.4-0.8
- $\varepsilon$: 0.3-1.0.

**7.** Emulsion according to claim 1, characterized in that the radicals $R^1$ to $R^6$ are chosen from the group consisting of: linear or branched alkyl radical, for example methyl, ethyl, propyl, butyl, isobutyl; an alkenyl radical such as, for example, vinyl; an aryl radical, for example phenyl or naphthyl; an arylalkyl radical such as, for example, benzyl or phenylethyl, an alkylaryl radical such as, for example, tolyl or xylyl; or an araryl radical such as biphenylyl.

**8.** Emulsion according to any one of claims 1 to 7, characterized in that the amines 2a are primary, secondary or tertiary amines which may be substituted, for example with one or more OH groups, or amines in the form of amides or amino acids.

**9.** Emulsion according to claim 8, characterized in that the amine 2a is an alkanolamine.

**10.** Emulsion according to claim 9, characterized in that it is an amine with alkyl group(s) containing from 1 to 5 carbon atoms and substituted with at least one OH, preferably from 1 to 3.

**11.** Emulsion according to claim 10, characterized in that the amine is chosen from the group consisting of 2-amino-2-methyl-1-propanol and 2-amino-2-ethyl-1,3-propanediol.

**12.** Emulsion according to claim 8, characterized in that the amine 2a is chosen from the group consisting of diamines, such as hydrazine and hexamethylenediamine, cyclic amines such as morpholine and pyridine, aromatic and

aliphatic amino acids such as 3-methyl-4-aminobenzoic acid, or alternatively amides of formula (IV)

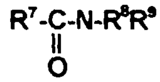 (IV)

in which $R^7$, $R^8$ and $R^9$ can represent hydrogen or alkyl groups containing from 1 to 5 carbon atoms, such as formamide, acetamide, N-ethylacetamide and N,N-dimethylbutyramide.

**13.** Emulsion according to any one of claims 1 to 12, characterized in that the carboxylic acid 2b is a saturated or unsaturated, linear or branched, $C_3$-$C_{22}$, preferably $C_{10}$-$C_{18}$, fatty acid.

**14.** Emulsion according to claim 13, characterized in that the carboxylic acid 2b is substituted, for example with an OH group.

**15.** Emulsion according to claim 13, characterized in that the carboxylic acid 2b is chosen from the group consisting of oleic acid, isostearic acid, stearic acid, ricinoleic acid and tall oil fatty acids.

**16.** Emulsion according to any one of claims 1 to 15, characterized in that the amine 2a is 2-amino-2-ethyl-1,3-propanediol and the carboxylic acid 2b is stearic acid.

**17.** Emulsion according to any one of claims I to 16, characterized in that the crosslinking agent 2c is a zirconium complex, preferably a zirconium ammonium carbonate.

**18.** Emulsion according to any one of claims I to 17, characterized in that it also comprises a metallic curing compound.

**19.** Process for waterproofing building materials, in which an emulsion according to any one of the preceding claims is applied to the material in question.

**20.** Waterproofing process according to claim 19, in which the emulsion is applied to a material which is a neutral substrate, such as stone, brick, tiles or wood.

**21.** Process for waterproofing building materials made of an alkaline substrate obtained from a mixture of hydraulic binder, inert material, water and optionally adjuvant, such as mortar or concrete, in which an emulsion according to any one of claims 7 to 18 together with claim 5 or 6 is applied to the material in question.

## Patentansprüche

**1.** Wäßrige Emulsion, umfassend

1. mindestens ein Harz

$$M_{\alpha}D_{\beta}T_{\gamma}Q_{\delta}(OR)_{\varepsilon} \quad (I),$$

worin:

- M = $R^1R^2R^3SiO1/2$
  D = $R^4R^5SiO2/2$
  T = $R^6SiO3/2$
  Q = SiO4/2,
- $R^1$, $R^2$, $R^3$, $R^4$, $R^5$ und $R^6$, die gleich oder voneinander verschieden sind, jeweils für einen $C_1$-$C_{12}$- und insbesondere $C_1$-$C_8$-kohlenwasserstoffhaltigen Rest stehen,
- R: Wasserstoffatom oder linearer oder verzweigter $C_1$-$C_4$-Alkylrest;
- das Copolymer in seiner Struktur mindestens ein Motiv T oder Q aufweist;

- die Symbole $\alpha$, $\beta$, $\gamma$, $\delta$ für die Molenbrüche der Siliciumatome jeweils der Typen M, D, T und Q bezogen auf ein Siliciumatom des Harzes der Formel (I) stehen; das Symbol $\varepsilon$ für den Molenbruch der Enden $\equiv$SiOR bezogen auf ein Siliciumatom des Harzes der Formel (I) steht; wobei diese Symbole innerhalb der folgenden Intervalle variieren:

  $\alpha$: 0 - 0,5
  $\beta$: 0 - 0,95
  $\gamma$: 0 - 0,9
  $\delta$: 0 - 0,8
  $\varepsilon$: 0,05 - 2

  wobei $\alpha + \beta + \gamma + \delta = 1$;

2. das Produkt aus einer Reaktion zwischen:

   2a. einem oder mehreren aromatischen oder aliphatischen polyfunktionellen Amin(en), das bzw. die 2 bis 25 Kohlenstoffatome enthalten;
   2b. einer oder mehreren Carbonsäure(n) oder Carbonsäureanhydrid(en), enthaltend 3 bis 22 Kohlenstoffatome;
   2c. mindestens einem Vernetzungsmittel, das ein wasserlöslicher Metallkomplex ist.

**2.** Emulsion nach Anspruch 1, dadurch gekennzeichnet, daß das Harz ein Copolymer der Formel (I) ist, worin:

- $R^1$ bis $R^6$, die gleich oder voneinander verschieden sind, jeweils für einen linearen oder verzweigten $C_1$-$C_8$-Alkylrest stehen,
- R: Wasserstoffatom oder linearer oder verzweigter $C_1$-$C_4$-Alkylrest;
- das Copolymer in seiner Struktur mindestens ein Motiv T (wobei das Symbol y dann eine von Null verschiedene Zahl ist) in Verbindung mit mindestens einem der Motive, ausgewählt aus M und D, aufweist.

**3.** Emulsion nach Anspruch 1, dadurch gekennzeichnet, daß das Harz vom Typ:

$$M_\alpha D_\beta T_\gamma (OR)_\varepsilon \quad (II),$$

ist, worin:

- $R^1$ bis $R^6$: gleiche oder verschiedene $C_1$-$C_8$-Alkylreste,
- R: Wasserstoffatom oder $C_1$-$C_4$-Alkylrest;
- $\alpha$: 0,1 - 0,3
- $\beta$: 0,1 - 0,5
- $\gamma$: 0,4 - 0,8
- $\varepsilon$: 0,08 - 1,5

wobei $\alpha + \beta + \gamma = 1$.

**4.** Emulsion nach Anspruch 3, dadurch gekennzeichnet, daß die Reste $R^1$ bis $R^6$ gleiche $C_1$-$C_3$-Alkylreste sind.

**5.** Emulsion nach Anspruch 1, dadurch gekennzeichnet, daß das Harz vom Typ:

$$D_\beta T_\gamma (OR)_\varepsilon \quad (III),$$

ist, worin:

- $R^4$ bis $R^6$: die gleich oder voneinander verschieden sind, jeweils für einen linearen oder verzweigten $C_1$-$C_8$-Alkylrest stehen,

- R: Wasserstoffatom oder linearer oder verzweigter $C_1$-$C_4$-Alkylrest;
- mindestens 25%, bezogen auf die Anzahl, des einen oder mehrerer der Substituenten $R^4$ bis $R^6$ für einen linearen oder verzweigten $C_3$-$C_8$-Alkylrest stehen,
- β: 0,2 - 0,9
  γ: 0,1 - 0,8
  ε: 0,2 - 1,5.

**6.** Emulsion nach Anspruch 1, dadurch gekennzeichnet, daß das Harz vom Typ:

$$D_{\beta}T_{\gamma}(OR)_{\varepsilon} \quad \text{(III)},$$

ist, worin:

- $R^4$ und $R^5$: die untereinander gleich sind, jeweils für einen $C_1$-$C_2$-Alkylrest stehen,
  $R^6$: die untereinander gleich sind, jeweils für einen linearen oder verzweigten $C_3$-$C_8$-Alkylrest stehen;
  R = Wasserstoffatom oder linearer $C_1$-$C_3$-Alkylrest;
- β: 0,2 - 0,6
  y: 0,4 - 0,8
  ε: 0,3 - 1,0.

**7.** Emulsion nach Anspruch 1, dadurch gekennzeichnet, daß die Reste $R^1$ bis $R^6$ ausgewählt sind aus der Gruppe, bestehend aus:

einem linearen oder verzweigten Alkylrest, beispielsweise Methyl, Ethyl, Propyl, Butyl, Isobutyl; einem Alkenylrest, wie beispielsweise Vinyl; einem Arylrest, beispielsweise Phenyl oder Naphthyl, einem Arylalkylrest, wie beispielsweise Benzyl oder Phenylethyl, Alkylaryl, wie beispielsweise Tolyl, Xylyl, oder einem Ararylrest, wie Biphenylyl.

**8.** Emulsion nach einem der Ansprüche 1 bis 7, dadurch gekennzeichnet, daß die Amine 2a primäre, sekundäre oder tertiäre Amine, die gegebenenfalls, beispielsweise durch eine oder mehrere OH-Gruppen, substituiert sind, oder Amine in Form von Amiden oder Aminosäuren, sind.

**9.** Emulsion nach Anspruch 8, dadurch gekennzeichnet, daß das Amin 2a ein Alkoholamin ist.

**10.** Emulsion nach Anspruch 9, dadurch gekennzeichnet, daß es sich um ein Amin mit einer oder mehreren Alkylgruppe (n) mit 1 bis 5 Kohlenstoffatomen, substituiert durch mindestens ein OH, vorzugsweise 1 bis 3 handelt.

**11.** Emulsion nach Anspruch 10, dadurch gekennzeichnet, daß das Amin ausgewählt wird aus der Gruppe, bestehend aus 2-Amino-2-methylpropan-1-ol und 2-Amino-2-ethylpropan-1,3-diol.

**12.** Emulsion nach Anspruch 8, dadurch gekennzeichnet, daß das Amin 2a ausgewählt wird aus der Gruppe, bestehend aus Diaminen, wie Hydrazin und Hexamethylendiamin, cyclischen Aminen, wie Morpholin und Pyridin, aromatischen und aliphatischen Aminosäuren, wie 3-Methyl-4-aminobenzoesäure, oder ferner Amiden der Formel (IV)

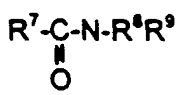

(IV)

in der $R^7$, $R^8$ und $R^9$ für Wasserstoff oder Alkylgruppen mit 1 bis 5 Kohlenstoffatomen stehen können, wie Formamid, Acetamid, N-Ethylacetamid und N,N-Dimethylbutyramid.

**13.** Emulsion nach einem der Ansprüche 1 bis 12, dadurch gekennzeichnet, daß die Carbonsäure 2b eine gesättigte oder ungesättigte, lineare oder verzweigte $C_3$-$C_{22}$-, vorzugsweise $C_{10}$-$C_{18}$-Fettsäure ist.

**14.** Emulsion nach Anspruch 13, dadurch gekennzeichnet, daß die Carbonsäure 2b substituiert ist, beispielsweise

durch eine OH-Gruppe.

**15.** Emulsion nach Anspruch 13, dadurch gekennzeichnet, daß die Carbonsäure 2b ausgewählt wird aus der Gruppe, bestehend aus Ölsäure, Isostearinsäure, Stearinsäure, Ricinolsäure und Fettsäuren des Tallöls.

**16.** Emulsion nach einem der Ansprüche 1 bis 15, dadurch gekennzeichnet, daß das Amin 2a 2-Amino-2-ethylpropan-1,3-diol und die Carbonsäure 2b Stearinsäure ist.

**17.** Emulsion nach einem der Ansprüche 1 bis 16, dadurch gekennzeichnet, daß das Vernetzungsmittel 2c ein Zirconiumkomplex, vorzugsweise ein Carbonat von Ammonium und von Zirconium ist.

**18.** Emulsion nach einem der Ansprüche 1 bis 17, dadurch gekennzeichnet, daß sie darüber hinaus eine eine Härtung vermittelnde Metallverbindung umfaßt.

**19.** Verfahren zur Hydrophobierung von Baumaterialien, in welchem man auf das fragliche Material eine Emulsion nach einem der vorangegangenen Ansprüche aufbringt.

**20.** Verfahren zur Hydrophobierung nach Anspruch 19, in welchem man die Emulsion auf ein Material, das ein neutrales Substrat, wie Stein, Ziegel, Dachziegel, Holz, ist, aufbringt.

**21.** Verfahren zur Hydrophobierung von Baumaterialien, hergestellt aus einem alkalischen Substrat, erhalten ausgehend von der Mischung von hydraulischem Binder, Füllmaterial, Wasser und gegebenenfalls Zusatzstoffen, wie Mörtel oder Beton, in welchem man auf das fragliche Material eine Emulsion nach einem der Ansprüche 7 bis 18 in Verbindung mit Anspruch 5 oder 6 aufbringt.

FIG. 1

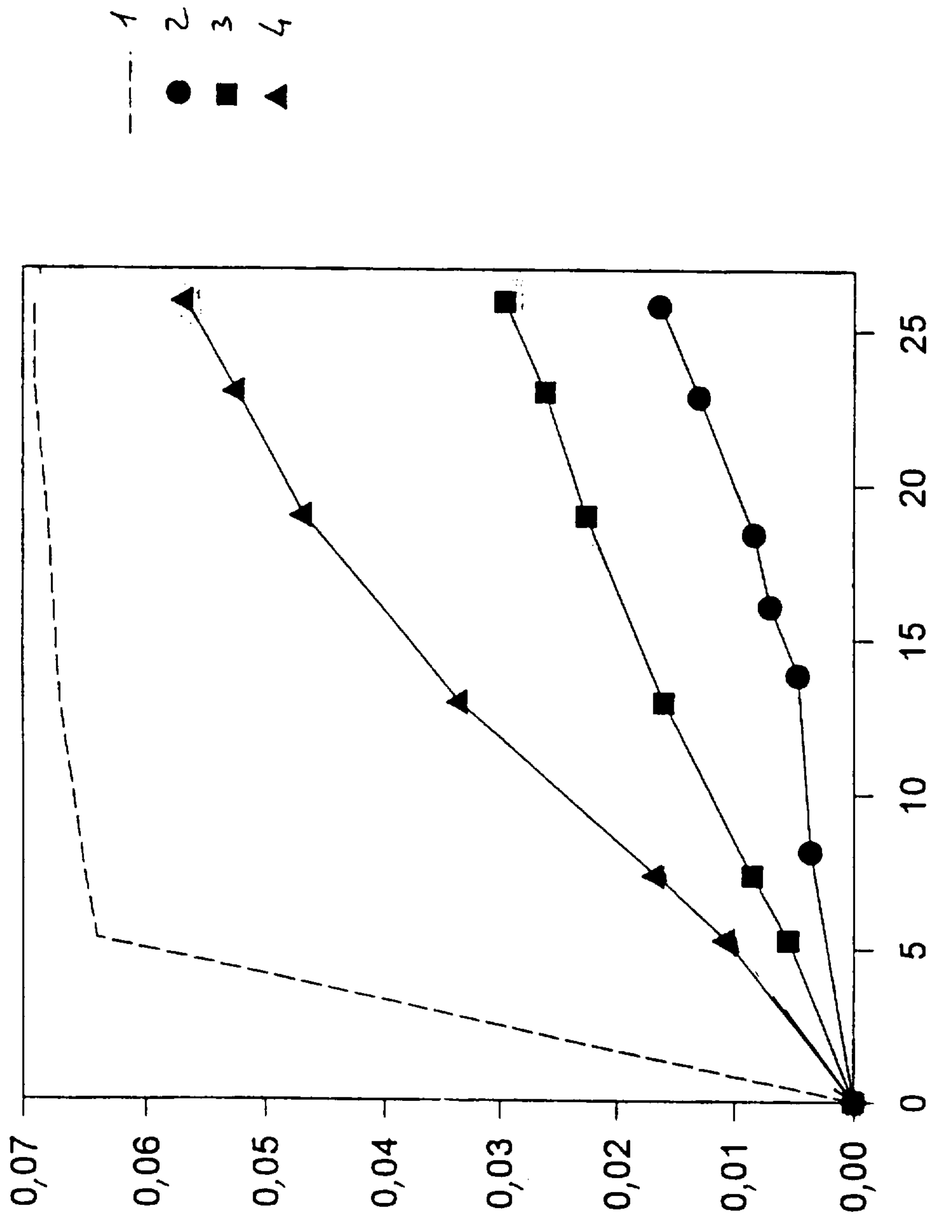

FIG. 2

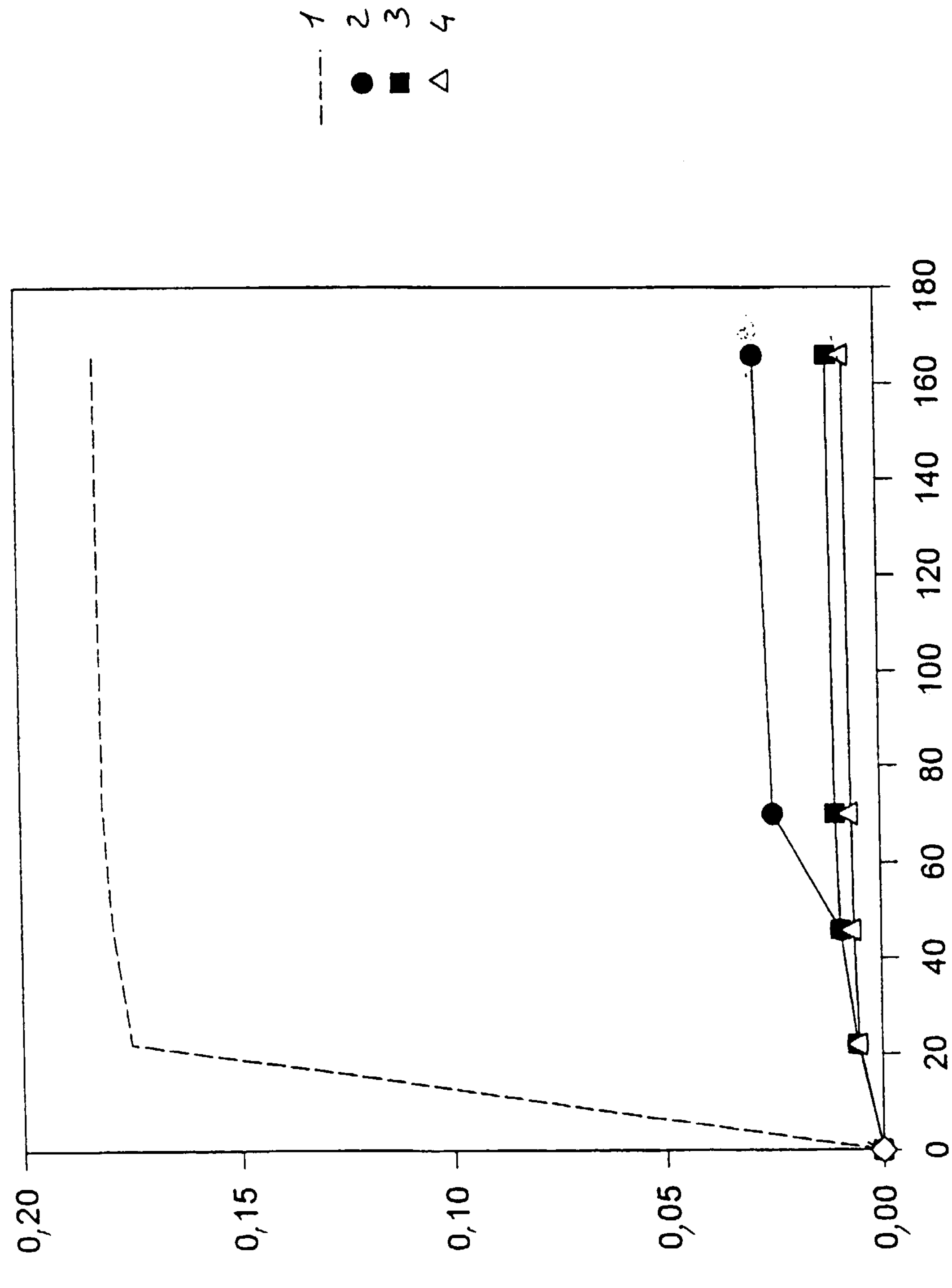

FIG. 3